# FASCICULE DE BREVET EUROPEEN

(11) **EP 0 785 097 B1**
(45) Date de publication et mention de la délivrance du brevet: **28.05.2003**
(21) Numéro de dépôt: 96117596.5
(22) Date de dépôt: 04.11.1996
(51) Int. Cl.: B60C 11/02, B29D 30/56

(54) **Bande de roulement de pneumatique prévulcanisée pour rechapage**
Vorvulkanisierte Reifenlauffläche zur Verwendung beim Reifenrunderneuern
Prevulcanized tyre tread to be used for retreading

(30) Priorité: 30.11.1995 FR 9514886
(43) Date de publication de la demande: 23.07.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Pouille, Guy, 63000 Clermont-Ferrand (FR); Ravel, Bernard, 63830 Nohanent (FR); Rivaton, Renaud, 63112 Blanzat (FR)
(74) Mandataire: Dequire, Philippe Jean-Marie Denis

(56) Documents cités:
- EP-A- 0 341 187
- DE-B- 1 232 845
- FR-A- 715 150
- FR-A- 2 192 907
- FR-A- 2 342 842
- FR-A- 2 553 719
- US-A- 4 174 239

## Description

La présente invention a pour objet une bande de roulement de pneumatique prévulcanisée pour rechapage, et plus précisément, le profil des bords de la bande de roulement. L'invention a aussi pour objet un pneumatique obtenu en utilisant cette bande de roulement.

On sait qu'un pneumatique est constitué d'une carcasse souple ayant grossièrement la forme d'un tore ouvert du côté de l'axe, et d'une bande de roulement plus épaisse qui entoure la périphérie de la carcasse et qui assure le contact du pneumatique avec le sol. La bande de roulement est donc soumise à une usure plus rapide que celle de la carcasse, et on a pensé depuis longtemps à remplacer cette bande de roulement, lorsqu'elle est usée, afin de reconstituer le pneumatique à un coût inférieur à celui d'un pneumatique neuf.

Cette reconstitution, appelée rechapage dans le cas le plus général où elle concerne la bande de roulement seule, fait appel à plusieurs types de produits et de procédés ; ainsi, la nouvelle bande de roulement peut être utilisée crue ou prévulcanisée :
- dans le premier cas, on vulcanise la nouvelle bande de roulement, crue, préalablement appliquée sur la carcasse, dans un moule semblable à celui qui est utilisé pour fabriquer le pneumatique neuf ;
- dans le second cas, dit rechapage "à froid", la bande de roulement prévulcanisée est appliquée sur la carcasse, avec interposition d'une couche de gomme de liaison vulcanisable; l'assemblage est ensuite usuellement entouré, en tout ou partie, d'une membrane étanche puis placé sous pression à l'intérieur d'un autoclave pour la vulcanisation de la gomme de liaison ; cette membrane a pour objet de garantir une application régulière d'une pression de plusieurs bars notamment dans la zone critique de liaison entre la bande de roulement et la carcasse pendant tout ou partie de la vulcanisation.

La présente invention concerne ce second type de rechapage.

La bande prévulcanisée peut se présenter sous différentes formes ; on *peut* préparer soit des bandes de grande longueur, plates ou préformées (cintrées transversalement, par exemple), qui sont coupées à la longueur voulue au moment du rechapage, soit des anneaux de longueur déterminée :
- les bandes plates permettent un rechapage simple, sûr et efficace, mais elles présentent plusieurs inconvénients: réduction de la largeur de la bande de roulement par rapport à celle du pneumatique neuf, aspect médiocre, apparition de fissures au roulage ;
- les bandes à "bavettes" sont pourvues latéralement de prolongements effilés, qu'on appelle aussi des "ailes", destinées à envelopper (partiellement ou complètement) les épaules du pneumatique ; on améliore ainsi l'aspect final du pneumatique rechapé, mais ces bandes présentent un grave inconvénient: au roulage, des fissures apparaissent dans la zone de raccordement de la bande de roulement avec la carcasse, et ces fissures se propagent dangereusement, soit en décollements de la bande de roulement, soit en cassures profondes de la carcasse ;
- les anneaux permettent une meilleure application sur la carcasse et évitent la jonction des deux extrémités de la bande de roulement, mais ils nécessitent des moyens de pose plus sophistiqués, et n'empêchent pas l'apparition des fissures dans la zone de raccordement.

On a essayé d'éviter l'apparition des fissures en proposant des ailes de bandes de roulement les plus effilées possible (EP-0 492 048, page 6, lignes 15 à 20) ou en répartissant les tensions dans la zone de raccordement de la bande de roulement avec la carcasse, par exemple en creusant des rainures circonférentielles sur les côtés externes de la bande de roulement (JP 6/191225). Cette dernière solution a diminué la rigidité en flexion des ailes et ainsi facilité leur application sur les épaules des carcasses de pneumatiques mais n'a pas entraîné de réduction significative des fissurations dans la zone critique de raccordement avec la carcasse.

Le document FR-A-2 192 907, conforme au préambule de la revendication 1, décrit une bande de roulement prévulcanisée, dont chaque aile latérale est suivie d'un bourrelet pour empêcher l'entrée d'air entre la bande de roulement et la surface de la carcasse disposée contre cette bande de roulement.

On a aussi essayé d'améliorer la qualité du collage entre la bande de roulement et la carcasse dans cette zone critique après avoir constaté que la gomme de liaison disposée entre la carcasse et la bande de roulement pouvait fluer pendant sa vulcanisation jusqu'à recouvrir une partie de la surface extérieure de l'aile de la bande de roulement, partie non préparée pour adhérer solidement avec cette gomme de liaison. Par exemple, US 5313745 propose de meuler les deux bords intérieur et extérieur des ailes des bandes de roulement pour améliorer leur collage avec la gomme de liaison. Cette solution a amélioré de façon sensible la résistance à la fissuration de la zone critique, mais ce problème des fissures subsiste, et nuit au développement de la technique du rechapage à froid, bien qu'elle soit par ailleurs très intéressante.

La présente invention vise donc à améliorer la qualité et la fiabilité de la liaison de la bande de roulement et de la carcasse dans les deux zones circonférentielles de raccordement des bords de la bande de roulement avec la carcasse.

Dans ce qui suit, on entend par :
- « bande de roulement prévulcanisée » une bande de roulement qui a déjà subi un cycle de vulcanisation, que ce cycle ait conduit à une vulcanisation totale ou partielle;
- « carcasse » un pneumatique auquel il manque seulement la bande de roulement, que ce pneumatique soit neuf ou usagé.

Suivant l'invention, une bande de roulement prévulcanisée comporte un sommet et deux ailes latérales, avec une semelle dont le profil transversal est plat ou concave et une surface extérieure, chaque aile latérale présentant, à partir du sommet, une zone d'amincissement progressif suivie d'un bourrelet constitué exclusivement de matériau élastomérique tel que, le profil transversal de l'extrémité latérale dudit bourrelet est convexe et s'écarte progressivement du profil transversal plat ou concave de la semelle de telle sorte que, au point B dudit profil de l'extrémité latérale du bourrelet dont la tangente est perpendiculaire à la tangente de l'extrémité latérale du profil de la semelle, la distance séparant ledit point B de ladite tangente de l'extrémité latérale du profil de la semelle est supérieure ou égale à l'épaisseur minimale de l'aile dans la zone d'amincissement progressif.

Avantageusement, le bourrelet est adjacent à une gorge longitudinale et le bourrelet et la gorge sont dimensionnés pour produire un découplage entre le bourrelet et le corps de l'aile compris entre le sommet et la gorge afin de soustraire ledit bourrelet aux efforts s'exerçant sur le corps de l'aile.

Préférentiellement, l'épaisseur minimale de l'aile est située au droit de la gorge longitudinale et l'épaisseur maximale du bourrelet est supérieure ou égale au double de l'épaisseur minimale de l'aile. Cette épaisseur minimale est avantageusement inférieure à 3 mm.

Ainsi, contrairement à la pratique de l'homme du métier qui s'efforce de donner au pneumatique rechapé le même profil que celui du pneumatique neuf, la demanderesse a constaté qu'en remplaçant le raccordement effilé progressif de l'aile de la bande de roulement par une gorge suivie d'un bourrelet doté d'une épaisseur substantielle dans la zone de raccordement entre la bande de roulement et la carcasse, on diminue de façon très marquée la sollicitation mécanique de la zone de raccordement et ainsi on améliore considérablement la résistance à la fissuration de la zone critique.

La présence du bourrelet a aussi l'avantage de garantir, pendant toute la phase de vulcanisation en autoclave, que les pressions de mise en joint des extrémités latérales des ailes contre la carcasse sont élevées et reproductibles, cela améliore la qualité et la fiabilité du collage dans la zone critique.

Dans un premier mode de réalisation, l'extrémité latérale du bourrelet a un profil transversal en forme de demi cercle de rayon supérieur ou égal à l'épaisseur minimale de l'aile.

Dans un second mode de réalisation de l'invention, l'extrémité latérale du bourrelet a un profil transversal convexe sensiblement rectiligne et forme avec le profil transversal de l'extrémité latérale de la semelle un angle α dont la mesure est comprise entre 90 et 140 degrés et préférentiellement entre 110 et 130 degrés.

Selon une caractéristique complémentaire, le profil transversal de la surface extérieure de la bande de roulement, au niveau du bourrelet, est sensiblement rectiligne et forme avec le profil sensiblement rectiligne de l'extrémité latérale du bourrelet un angle β dont la mesure est inférieure ou égale à sensiblement 90 degrés;

La géométrie du bourrelet selon l'invention et notamment dans ces deux modes de réalisation de l'invention a l'avantage de définir de façon très précise jusqu'où va fluer la gomme de liaison. En effet, la cavité prévue pour ce fluage est délimitée par l'extrémité latérale du bourrelet, la membrane qui s'appuie sur la surface extérieure de l'aile et le profil de la carcasse au-delà de la zone de raccordement. La pression s'appliquant sur la membrane pendant la vulcanisation est telle que la gomme de liaison ne peut pas s'infiltrer entre la membrane et la surface extérieure du bourrelet au-delà de la cavité prévue. Ces solutions entraînent donc la présence d'un cordon de gomme de liaison nettement délimité à la surface extérieure du pneumatique rechapé qui procure à ce pneumatique un aspect très esthétique.

On va décrire un exemple de réalisation de l'invention, donné à titre non limitatif, en se référant au dessin annexé sur lequel :
- la figure 1 est une demi-coupe transversale d'une bande de roulement prévulcanisée en anneau conforme à l'invention ;
- la figure 2 est une vue en coupe transversale à plus grande échelle d'un premier mode de réalisation du bord de l'aile de la bande de roulement de la figure 1, après son application sur la carcasse ;
- la figure 3 est une vue similaire à la figure 2 d'un second mode de réalisation du bord de l'aile de la bande de roulement de la figure 1 ;
- la figure 4 présente une bande de roulement plate à bavettes constituée de deux matériaux
- les figures 5 (a) et 5 (b) sont des coupes agrandies des premier et second modes de réalisation de bourrelets d'ailes de bandes de roulement.

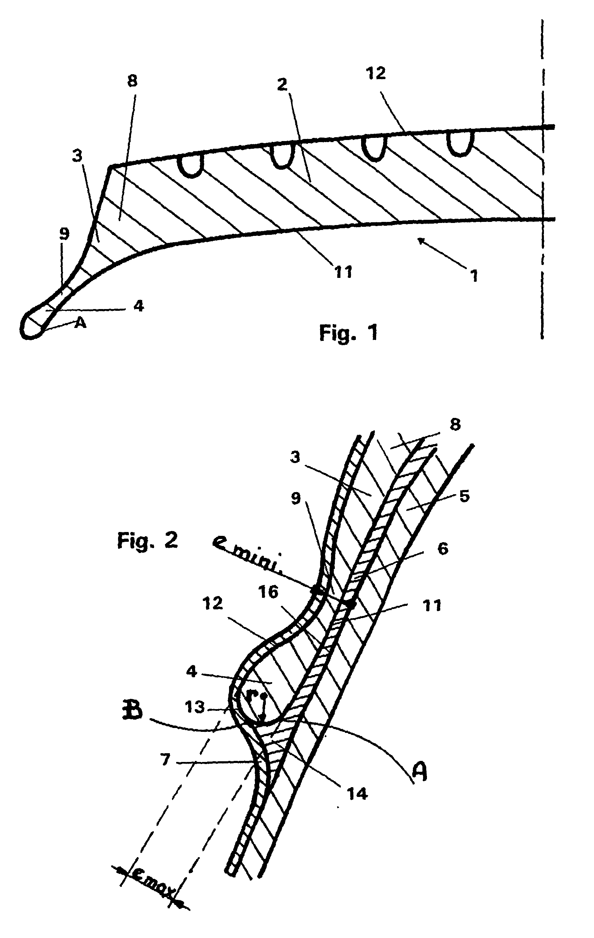

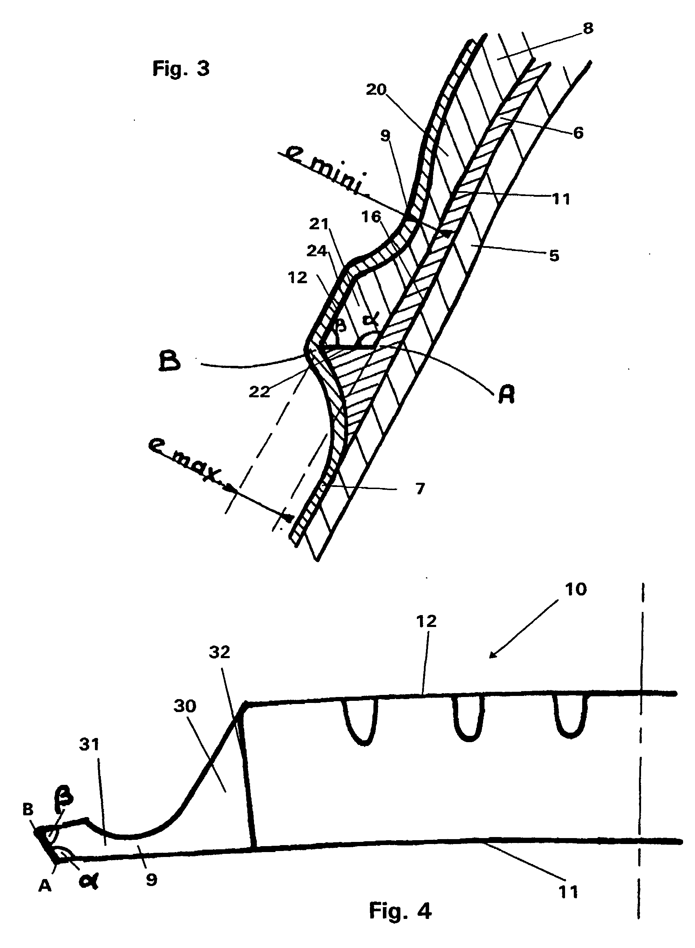

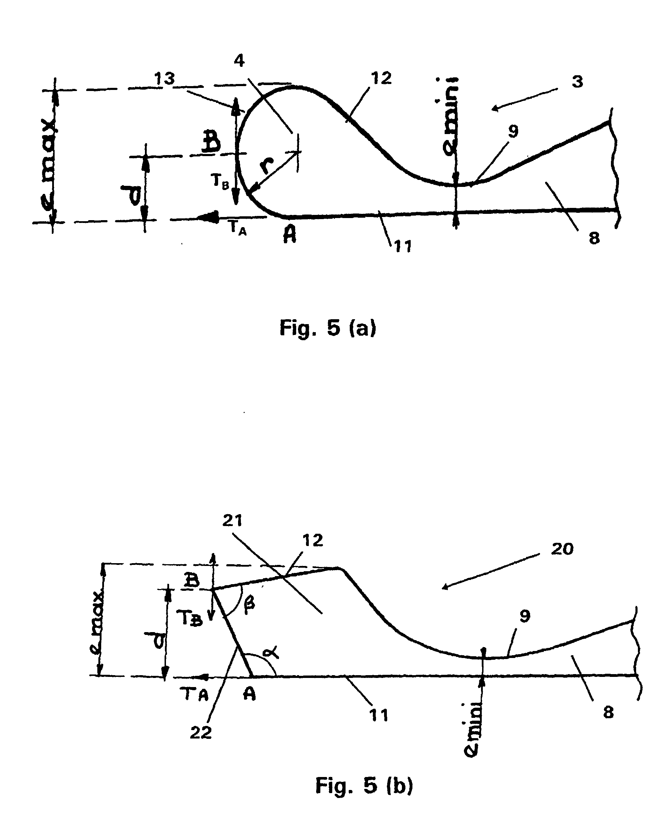

On voit sur la figure 1 une demi-section transversale de bande de roulement prévulcanisée 1 en anneau comportant une partie médiane épaisse appelée sommet 2 et une partie latérale plus mince 3 appelée "bavette" ou "aile". L'aile 3 comprend une zone d'amincissement progressif 8 suivie latéralement par un bourrelet 4. Cette bande de roulement 1 présente aussi une semelle 11 destinée à être appliquée contre la surface extérieure 16 d'une carcasse 5 de pneumatique avec l'interposition d'une gomme de liaison vulcanisable 6. Cette semelle 11 s'arrête latéralement à l'arête A où, après application sur la carcasse, le profil de l'aile 3 s'écarte du profil de la carcasse 5. La semelle 11, au niveau du sommet 2, est destinée à être appliquée contre le sommet de la carcasse du pneumatique et, au niveau de l'aile, à être appliquée contre l'épaule ainsi qu'éventuellement contre le haut des flancs de la carcasse. La bande de roulement 1 comprend aussi une surface extérieure 12 destinée, après son application sur une carcasse de pneumatique, à constituer la surface extérieure du pneumatique. Une telle coupe de bande de roulement correspond aussi à une bande plate cintrée transversalement. L'invention s'applique également aux bandes plates dont la semelle a un profil transversal complètement plat (voir figures 4 et 5).

La présente invention concerne le profil du bourrelet 4 de l'aile 3, qui va être décrit plus en détail en se référant aux figures 2, 3 et 5.

On retrouve sur cette figure 2 le bourrelet 4 de l'aile 3 de la bande de roulement 1, après son application sur la carcasse 5 ; une couche de gomme de liaison 6 a été interposée entre la carcasse et la bande de roulement 1 afin d'assurer leur adhésion après la vulcanisation, en autoclave par exemple, de cette gomme de liaison 6.

Préalablement à cette vulcanisation et après l'assemblage de la bande de roulement 1 sur la carcasse 5, on pose autour de cet assemblage une membrane souple 7 qui enrobe le profil extérieur de l'assemblage, puis on place l'ensemble ainsi préparé dans un autoclave dont la pression intérieure est portée à 5 ou 6 bars (500 ou 600 kPa), et la température à environ 115° C pendant une durée de l'ordre de deux heures. La membrane 7 est fixée de façon étanche de telle sorte que l'on puisse établir entre la membrane et le pneu un vide relatif obligeant cette dernière à épouser parfaitement le profil extérieur de l'assemblage et assurer pendant toute la durée de la vulcanisation une forte pression efficace d'application de la bande de roulement 1 sur la carcasse 5, notamment dans la zone critique de raccordement.

Suivant l'invention, on voit sur les figures 1, 2 et 5 (a) que le profil de l'aile 3 de la bande de roulement 1 comprend successivement, en partant du sommet 2, une zone d'amincissement progressif 8, une gorge circonférentielle 9 d'épaisseur minimale eₘᵢₙ, puis un bourrelet circonférentiel 4. De préférence, l'épaisseur maximale eₘₐₓ du bourrelet 4 est au moins égale au double de l'épaisseur minimale de l'aile 3 au droit de la gorge circonférentielle 9. L'épaisseur minimale eₘᵢₙ est inférieure à 3 mm, de l'ordre de 1 à 2 mm, voire moins si cela est possible.

La gorge circonférentielle 9 est ainsi un moyen de découplage mécanique qui, à cause de l'épaisseur du bourrelet 4, est très efficace et permet effectivement de limiter les contraintes de traction génératrices des fissurations subies en roulage au niveau de la zone de raccordement entre l'aile 3 et la carcasse 5. De préférence, ce moyen de découplage est une seule gorge circonférentielle 9 de profil très arrondi. Le rayon de cette gorge peut ainsi être avantageusement supérieur à 5 fois l'épaisseur minimale de l'aile.

Dans le mode de réalisation des figures 2 et 5 (a), le bourrelet 4 a une section droite dont l'extrémité latérale 13 a une forme convexe arrondie. Le point B correspond au point du profil transversal de l'extrémité latérale 13 du bourrelet 4 dont la tangente T_{B} est perpendiculaire à la tangente T_{A} de l'extrémité latérale A du profil de la semelle 11. La distance d qui sépare B de cette tangente T_{A} doit être supérieure ou égal à l'épaisseur minimale de l'aile qui se trouve au niveau de la gorge longitudinale 9. Ce bourrelet selon l'invention a donc dans la zone de raccordement entre la carcasse et la bande de roulement une épaisseur substantielle.

Ici, le profil de l'extrémité latérale a sensiblement la forme d'un demi cercle. Et le rayon r de ce demi cercle est notablement supérieur à l'épaisseur minimale eₘᵢₙ de la gorge 9.

L'extrémité latérale 13 du bourrelet 4, le profil extérieur de la carcasse 5 et la semelle de la membrane 7 définissent une cavité 14 qui est remplie pendant la vulcanisation par la gomme de liaison 6 rendue fluide par la chaleur. En raison de la pression appliquée par la membrane 7 sur le bourrelet 4, la gomme de liaison 6 ne peut pas s'infiltrer entre la membrane 7 et le bourrelet 4, en conséquence, la zone de fluage de la gomme de liaison 6 est bien contrôlée et donne lieu à une zone de raccordement très esthétique après l'enlèvement de la membrane 7.

Les figures 3 et 5 (b) présentent un deuxième mode de réalisation d'une aile 20 selon l'invention. Dans ce cas, l'aile comprend comme précédemment une gorge 9 de découplage mécanique suivie d'un bourrelet 21. L'extrémité latérale 22 du bourrelet 21 se raccorde en A avec la semelle 11 et en B avec la surface extérieure 12 de la bande de roulement. Cette extrémité latérale 22 a un profil transversal sensiblement rectiligne entre les points A et B formant en A avec le profil transversal de l'extrémité latérale de la semelle 11 du bourrelet 21 un angle α dont la mesure est comprise entre 90 et 140 degrés et de préférence entre 110 et 130 degrés. Dans cette gamme de valeurs préférentielles, cet angle α favorise une pression d'application reproductible transmise par la membrane 7 à la zone de raccordement entre la carcasse et la bande de roulement, autour de A, pendant toute la durée du séjour en autoclave de l'assemblage carcasse et bande de roulement. Le profil transversal de la surface extérieure 12 de la bande de roulement au niveau du bourrelet 21 est dans cet exemple sensiblement rectiligne et forme en B avec l'extrémité latérale 22 du bourrelet un angle β de mesure inférieure ou égale à 90 degrés. Ce profil transversal de la surface extérieure au niveau du bourrelet est ici sensiblement parallèle à la semelle 11. En conséquence, il y a une forte pression d'application de la membrane 7 sur la surface extérieure 12 au niveau du bourrelet 21 jusqu'à l'arête B et ainsi une définition particulièrement précise de la zone de raccordement entre la gomme de liaison 6 après son fluage pendant la vulcanisation et le bourrelet 21. Ce segment de droite 22 forme ainsi une sorte de falaise où la gomme de liaison 6 peut librement fluer sans pouvoir s'infiltrer au-delà. D'où comme précédemment un aspect esthétique très appréciable de la zone de raccordement entre l'aile 20 de la bande de roulement et la carcasse 5.

Conformément à l'invention, la distance d séparant B de la tangente T_{A} du profil de l'extrémité latérale de la semelle 11 en A est notablement supérieure à l'épaisseur minimale de l'aile eₘᵢₙ, et l'épaisseur maximale eₘₐₓ du bourrelet 21 est supérieure au double de cette épaisseur minimale eₘᵢₙ.

Ces deux géométries d'ailes 3, 20, moins fragiles, entraînent aussi que les bandes de roulement selon l'invention sont beaucoup plus aisées à manipuler pendant toutes les opérations de fabrication et d'assemblage que les bandes de roulement à ailes effilées. De plus, les préparations de la semelle et de l'extrémité latérale des bourrelets 4, 21 pour un bon collage avec la gomme de liaison sont aussi facilitées. Ces préparations peuvent, par exemple, être réalisée par brossage ou meulage.

La figure 4 présente une bande de roulement 10 plate à bavette selon l'invention réalisée avec deux matériaux élastomériques différents. On retrouve la gorge de découplage 9 et le bourrelet 31 de géométries proches de celles de la figure 3. Le sommet 2 est réalisé comme précédemment avec un matériau élastomérique constituant usuellement des bandes de roulement. En revanche, les ailes 30 sont réalisées avec un matériau élastomérique de composition et de dureté similaires à ceux des flancs extérieurs des pneumatiques. La surface de séparation 32 entre les deux matériaux est situé sensiblement au niveau de la zone de liaison entre les ailes et le sommet. En conséquence, la rigidité mécanique des ailes 30 est réduite ainsi que les contraintes subies par la zone critique de raccordement entre l'extrémité latérale des ailes et la carcasse et la résistance à la fissuration est encore améliorée.

Cette solution peut, bien entendu, être appliquée à tous les types de bandes de roulement prévulcanisées.

La demanderesse a effectué des essais avec des pneumatiques de dimensions 275/70 R 22,5 et 315/70 R 22,5 (poids lourds) qui avaient été rechapés avec des bandes de roulement prévulcanisées comportant respectivement des ailes effilées d'un type connu, et des ailes comportant un bourrelet suivant l'invention. Ces essais ont démontré une amélioration très sensible de la résistance à la fissuration dans la zone critique de raccordement entre la bande de roulement et la carcasse et ainsi un gain important en fatigue pour le pneumatique rechapé.

Le procédé de rechapage décrit précédemment comprend l'utilisation d'une membrane souple pendant la phase de vulcanisation. On peut aussi ne pas employer de membrane étanche. On parle alors de vulcanisation « sans membrane ». Ce procédé est plus délicat que le précédent et nécessite de prendre des dispositions particulières pendant l'assemblage de la bande de roulement et de la carcasse pour garantir l'étanchéité dans la zone critique de raccordement mais a l'avantage d'être moins coûteux. La nouvelle géométrie de bandes de roulement selon l'invention donne aussi d'excellents résultats avec ce procédé sans membrane bien que l'étendue du fluage de la gomme de liaison soit moins bien maîtrisée.

Les bandes de roulement selon l'invention peuvent aussi, bien entendu, être utilisées pour réaliser des pneumatiques neufs à partir de carcasses neuves vulcanisées.

## Revendications

1. Bande de roulement prévulcanisée (1, 10) comportant un sommet (2) et deux ailes (3,20,30) latérales, avec une semelle (11) dont le profil transversal est plat ou concave et une surface extérieure (12), chaque aile latérale (3, 20, 30) présentant, à partir du sommet (2), une zone d'amincissement progressif (8) suivie d'un bourrelet (4, 21, 31) constitué exclusivement de matériau élastomérique, **caractérisée en ce que** le profil transversal de l'extrémité latérale (13, 22) dudit bourrelet (4, 21, 31) est convexe et s'écarte progressivement du profil transversal plat ou concave de la semelle (11) de telle sorte que, au point B dudit profil de l'extrémité latérale (13, 22) du bourrelet (4, 21, 31) dont la tangente est perpendiculaire à la tangente de l'extrémité latérale du profil de la semelle (11), la distance séparant ledit point B de ladite tangente de l'extrémité latérale du profil de la semelle (11) est supérieure ou égale à l'épaisseur minimale de l'aile (3, 20, 30) dans la zone d'amincissement progressif (8).

2. Bande de roulement prévulcanisée (1, 10) selon la revendication 1, dans laquelle la zone de liaison entre la zone d'amincissement progressif (8) et le bourrelet (4, 21, 31) est une gorge longitudinale (9).

3. Bande de roulement prévulcanisée (1, 10) selon la revendication 2, dans laquelle l'épaisseur minimale de l'aile (3, 20, 30) est située au droit de la gorge longitudinale (9).

4. Bande de roulement prévulcanisée (1, 10) selon la revendication 3, dans laquelle l'épaisseur maximale du bourrelet (4, 21, 31) est supérieure ou égale au double de l'épaisseur minimale de l'aile (3, 20, 30) au droit de la gorge longitudinale (9).

5. Bande de roulement prévulcanisée (1, 10) selon l'une des revendications 2 à 4, dans laquelle le rayon de la gorge longitudinale (9) est supérieur ou égal à 5 fois l'épaisseur minimale de l'aile (3, 20, 30).

6. Bande de roulement prévulcanisée (1, 10) selon l'une des revendications 1 à 5, dans laquelle l'épaisseur minimale des ailes (3, 20, 30) est inférieure à 3 mm.

7. Bande de roulement prévulcanisée (1, 10) selon l'une des revendications 1 à 6, dans laquelle l'extrémité latérale (13) du bourrelet (4) a un profil transversal en forme de demi cercle de rayon supérieur ou égal à l'épaisseur minimale de chaque aile (3).

8. Bande de roulement prévulcanisée (1, 10) selon l'une des revendications 1 à 6, dans laquelle l'extrémité latérale (22) du bourrelet (21, 31) a un profil transversal sensiblement rectiligne et forme avec le profil transversal de l'extrémité latérale de la semelle (11) un angle α dont la mesure est sensiblement comprise entre 90 et 140 degrés.

9. Bande de roulement prévulcanisée (1, 10) selon la revendication 8, dans laquelle l'angle a a une mesure comprise entre 110 et 130 degrés.

10. Bande de roulement prévulcanisée (1, 10) selon l'une des revendications 8 ou 9, dans laquelle le profil transversal de la surface extérieure (12) est, au niveau du bourrelet (21), sensiblement rectiligne et forme avec l'extrémité latérale (22) sensiblement rectiligne du profil du bourrelet (21, 31) un angle β dont la mesure est inférieure ou égale à sensiblement 90 degrés.

11. Bande de roulement prévulcanisée (10) selon l'une des revendications 1 à 10, dans laquelle le sommet (2) et les ailes (30) sont réalisées avec deux matériaux élastomériques différents de compositions et de duretés similaires à ceux des matériaux élastomérique constituants respectivement des bandes de roulement et des flancs extérieurs des pneumatiques.

12. Pneumatique obtenu par l'assemblage d'une carcasse (5) et d'une bande de roulement prévulcanisée (1, 10) selon l'une des revendications 1 à 11.

## Patentansprüche

1. Vorvulkanisierte Lauffläche (1, 10), die einen Scheitel (2) und zwei seitliche Flügel (3, 20, 30) aufweist, mit einer Sohle (11), deren Querprofil eben oder konkav ist, und einer Außenoberfläche (12), wobei jeder seitliche Flügel (3, 20, 30), vom Scheitel (2) ausgehend, eine Zone (8) fortlaufender Verdünnung aufweist, die von einem Wulst (4, 21, 31) gefolgt ist, der ausschließlich zum Beispiel aus Elastomermaterial gebildet ist, **dadurch gekennzeichnet, daß** das Querprofil des seitlichen Endes (13, 22) des genannten Wulstes (4, 21, 31) konvex ist und sich fortlaufend vom flachen oder konkaven Profil der Sohle (11) derart entfernt, daß im Punkt B des genannten Profils des seitlichen Endes (13, 22) des Wulstes (4, 21, 31), dessen Tangente senkrecht steht zur Tangente des seitlichen Endes des Profils der Sohle (11), der Abstand, der den genannten Punkt B von der Tangente des seitlichen Endes des Profils der Sohle (11) trennt, grösser oder gleich ist der minimalen Dicke des Flügels (3, 20, 30) in der Zone (8) fortlaufender Verdünnung.

2. Vorvulkanisierte Lauffläche (1, 10) nach Anspruch 1, worin die Verbindungszone zwischen der Zone (8) der fortlaufenden Verdünnung und dem Wulst (4, 21, 31) eine Längsrinne (9) ist.

3. Vorvulkanisierte Lauffläche (1, 10) nach Anspruch 2, worin die minimale Dicke des Flügels (3, 20, 30) längs der Längsrinne (9) liegt.

4. Vorvulkanisierte Lauffläche (1, 10) nach Anspruch 3, worin die maximale Dicke des Wulstes (4, 21, 31) größer oder gleich ist dem Doppelten der minimalen Dicke des Flügels (3, 20, 30) längs der Längsrinne (9).

5. Vorvulkanisierte Lauffläche (1, 10) nach einem der Ansprüche 2 bis 4, worin der Radius der Längsrinne (9) größer oder gleich ist dem 5-fachen der minimalen Dicke des Flügels (3, 20, 30).

6. Vorvulkanisierte Lauffläche (1, 10) nach einem der Ansprüche 1 bis 5, worin die minimale Dicke der Flügel (3, 20, 30) kleiner als 3 mm ist.

7. Vorvulkanisierte Lauffläche (1, 10) nach einem der Ansprüche 1 bis 6, worin das seitliche Ende (13) des Wulstes (4) ein Querprofil in Form eines Kreisbogens mit einem Radius hat, der größer oder gleich der minimalen Dicke eines jeden Flügels (3) ist.

8. Vorvulkanisierte Lauffläche (1, 10) nach einem der Ansprüche 1 bis 6, worin das seitliche Ende (22) des Wulstes (21, 31) ein im wesentlichen geradliniges Querprofil hat und mit dem Querprofil des seitlichen Endes der Sohle (11) einen Winkel α bildet, dessen Größe im wesentlichen zwischen 90 und 140 Grad liegt.

9. Vorvulkanisierte Lauffläche (1, 10) nach Anspruch 8, worin der Winkel α eine Größe hat, die im wesentlichen zwischen 110 und 130 Grad liegt.

10. Vorvulkanisierte Lauffläche (1, 10) nach einem der Ansprüche 8 oder 9, worin das Querprofil der Außenoberfläche (12) auf Höhe des Wulstes (21) im wesentlichen geradlinig ist und mit dem im wesentlichen geradlinigen seitlichen Ende (22) des Profils des Wulstes (21, 31) einen Winkel β bildet, dessen Größe kleiner oder gleich 90 Grad ist.

11. Vorvulkanisierte Lauffläche (10) nach einem der Ansprüche 1 bis 10, worin der Scheitel (2) und die Flügel (30) aus zwei unterschiedlichen Elastomermaterialien mit ähnlichen Zusammensetzungen und Härten hergestellt sind, die gleichartig denen der Elastomermaterialien sind, die die Laufflächen bzw. die äußeren Flanken der Reifen bilden.

12. Reifen, der durch Zusammenbau einer Karkasse (5) und einer vorvulkanisierten Lauffläche (1, 10) nach einem der Ansprüche 1 bis 11 erhalten wurde.

## Claims

1. A prevulcanised tread (1, 10) comprising a crown (2) and two side wings (3, 20, 30) with a base (11) the transverse profile of which is flat or concave and an external surface (12), each side wing (3, 20, 30) having, starting from the crown (2), a progressively tapering region (8) followed by a bead (4, 21, 31) exclusively of elastomeric material, **characterised in that** the transverse profile of the lateral end (13, 22) of said bead (4, 21, 31) is convex and diverges progressively from the flat or concave transverse profile of the base (11) in such a way that at the point B of said profile at the lateral end (13, 22) of the bead (4, 21, 31), the tangent of which is perpendicular to the tangent of the lateral end of the profile of the base (11), the distance separating said point B from said tangent of the lateral end of the profile of the base (11) is greater than or equal to the minimum thickness of the wing (3, 20, 30) in the progressively tapering region (8).

2. A prevulcanised tread (1, 10) according to claim 1, wherein the region of connection between the progressively tapering region (8) and the bead (4, 21, 31) is a longitudinal groove (9).

3. A prevulcanised tread (1, 10) according to claim 2, wherein the minimum thickness of the wing (3, 20, 30) is level with the longitudinal groove (9).

4. A prevulcanised tread (1, 10) according to claim 3, wherein the maximum thickness of the bead (4, 21, 31) is greater than or equal to twice the minimum thickness of the wing (3, 20, 30) at the longitudinal groove (9).

5. A prevulcanised tread (1, 10) according to one of claims 2 to 4, wherein the radius of the longitudinal groove (9) is greater than or equal to 5 times the minimum thickness of the wing (3, 20, 30).

6. A prevulcanised tread (1, 10) according to one of claims 1 to 5, wherein the minimum thickness of the wings (3, 20, 30) is less than 3 mm.

7. A prevulcanised tread (1, 10) according to one of claims 1 to 6, wherein the lateral end (13) of the bead (4) has a transverse profile in the form of a semicircle of radius greater than or equal to the minimum thickness of each wing (3).

8. A prevulcanised tread (1, 10) according to one of claims 1 to 6, wherein the lateral end (22) of the bead (21, 31) has a substantially rectilinear transverse profile and forms, with the transverse profile of the lateral end of the base (11), an angle (3 which measures substantially between 90° and 140°.

9. A prevulcanised tread (1, 10) according to claim 8, wherein the angle β measures between 110° and 130°.

10. A prevulcanised tread (1, 10) according to one of claims 8 or 9, wherein the transverse profile of the external surface (12) is, at the bead (21), substantially rectilinear and forms, with the substantially rectilinear lateral end (22) of the profile of the bead (21, 31), an angle β which measures less than or substantially 90°.

11. A prevulcanised tread (10) according to one of claims 1 to 10, wherein the crown (2) and the wings (30) are made with two different elastomeric materials having compositions and hardnesses which are similar to those of the elastomeric materials from which the treads and external sidewalls of the tyres are respectively produced.

12. A tyre obtained by assembling a carcass (5) and a prevulcanised tread (1, 10) according to one of claims 1 to 11.
